# EUROPÄISCHE PATENTSCHRIFT

(11) **EP 1 292 469 B1**
(45) Veröffentlichungstag und Bekanntmachung des Hinweises auf die Patenterteilung: **06.05.2004**
(21) Anmeldenummer: 01944975.0
(22) Anmeldetag: 08.06.2001
(51) Int. Cl.: B60R 21/26

(54) **GASGENERATOR, INSBESONDERE ZUM BEFÜLLEN EINES GASSACKS**
GAS GENERATOR, ESPECIALLY FOR FILLING AN AIRBAG
GENERATEUR DE GAZ DESTINE NOTAMMENT A REMPLIR UN SAC A GAZ

(30) Priorität: 09.06.2000 DE 10028168
(43) Veröffentlichungstag der Anmeldung: 19.03.2003
(73) Patentinhaber: Lell, Peter, Dr., 85368 Moosburg (DE)
(72) Erfinder: Lell, Peter, Dr., 85368 Moosburg (DE)
(74) Vertreter: Eder, Eugen, Dipl.-Ing.
(86) Internationale Anmeldenummer: PCT/DE2001/002134
(87) Internationale Veröffentlichungsnummer: WO 2001/094160

(56) Entgegenhaltungen:
- DE-A- 4 135 657
- DE-A- 19 635 637
- US-A- 5 335 940

## Beschreibung

Die Erfindung betrifft einen Gasgenerator, insbesondere zum Befüllen eines Gassacks. Ein Gasgenerator mit den Merkmalen des Oberbegriffs des Patentanspruchs 1, ist beispielsweise aus der DE 4 135 657 A bekannt.

Gasgeneratoren sind in vielfältigen Ausführungsformen bekannt. Für bestimmte Einsatzzwecke finden insbesondere Hybrid-Gasgeneratoren Anwendung. Bei diesem Typ Gasgenerator wird mittels eines Anzünders ein in einer Brennkammer enthaltenes Gas erzeugendes Material aktiviert. Hierbei handelt es sich üblicherweise um eine pyrotechnische Treibladung, welche nach ihrer Zündung abbrennt und auf diese Weise Gas erzeugt. Bei dieser Art Gaserzeugung entsteht ein Treibgas, welches mit festen oder flüssigen Partikeln durchsetzt ist, die beim Abbrand der Treibladung entstehen. Das Treibgas kann bei Hybrid-Gasgeneratoren eine Einrichtung betätigen, die einen Gasbehälter öffnet, in welchem unter Druck stehendes Vorratsgas enthalten ist. Bei dem Vorratsgas kann es sich beispielsweise um Argon mit einem geringen Heliumanteil handeln. An der Auslassöffnung des Hybrid-Gasgenerators tritt dann das Gemisch aus dem Treibgas und aus dem im Gasbehälter enthaltenen Vorratsgas aus und kann beispielsweise zum Befüllen eines Gassacks dienen.

Um den Gassack, bei dem es sich auch um ein sicherheitskritisches Element, wie z.B. einen Airbag für ein Kfz, handeln kann, während des Befüllvorgangs nicht zu beschädigen, ist es erforderlich, die beim Abbrand der Treibladung entstehenden festen oder flüssigen Partikel im Gasgenerator zurückzuhalten. Hierzu ist es bekannt, im Bereich der einen oder mehreren Auslassöffnungen des Gasgenerators ein Filterelement zu verwenden.

Beispielsweise ist aus der DE 196 02 009 A1 ein Hybrid-Gasgenerator bekannt, bei dem im Bereich mehrerer in Bezug auf die Längsachse des Gasgenerators radial vorgesehener Austrittsöffnungen, die in einem Filterkammergehäuse vorgesehen sind, ein Filterelement anzuordnen. Das austretende Gas tritt durch das Filterelement hindurch und wird auf diese Weise von Partikeln gereinigt.

Aus der EP 0 669 231 A2 ist ebenfalls ein Hybrid-Gasgenerator zum Befüllen eines Gassacks bekannt, bei dem im Bereich mehrerer Auslassöffnungen ein Filterelement vorgesehen ist, welches aus einem Gitter, Geflecht oder Vlies besteht und aus einem geeigneten Werkstoff, wie z.B. Metall oder Keramik hergestellt ist.

Diese an sich bekannten Filterelemente weisen den Nachteil eines hohen Strömungswiderstands für das durch sie hindurchtretende Gas auf. Zudem sind die verwendbaren Siebe sehr teuer. Hierdurch muss innerhalb des Gasgenerators ein entsprechend hoher Druck erzeugt werden, wenn ein vorgegebener Gasvolumenstrom in der kurzen Zeitspanne erzeugt werden soll. Ein hoher Druck bringt wiederum den Nachteil mit sich, dass das Gehäuse entsprechend druckfest ausgelegt werden muss, was zu einem höheren Gewicht und höheren Herstellungskosten für den Gasgenerator führt.

Ausgehend von diesem Stand der Technik liegt der Erfindung die Aufgabe zu Grunde, einen Gasgenerator, insbesondere zum Befüllen eines Gassacks zu schaffen, welcher eine Rückhalteeinrichtung für Partikel aufweist, die zum Einen eine ausreichende Rückhaltewirkung und zum Anderen einen geringen Strömungswiderstand aufweist.

Die Erfindung löst diese Aufgabe mit den Merkmalen des Patentanspruchs 1.

Die Erfindung geht von der Erkenntnis aus, dass durch ein Umleiten des Gasstroms oder mehrerer einzelner Teil-Gasströme um einen ausreichenden Winkelbetrag und ausreichend enge Kurvenradien Partikel in Folge ihrer höheren Masseträgheit dem Gasstrom nicht mehr folgen können und auf diese Weise aus dem Gasstrom extrahierbar sind.

An der Stelle, an der die Partikel den Gasstrom oder den Teil-Gasstrom verlassen, ist erfindungsgemäß ein Prallbereich und/oder ein Auffangbereich vorgesehen. Der Prallbereich ist so ausgebildet, dass die auf ihn auftreffenden Partikel durch den Aufprall in kleinere Partikel zerplatzen. Der Auffangbereich ist so ausgebildet, dass die gegebenenfalls zerplatzten Partikel im Auffangbereich zurückgehalten werden.

In einer Ausführungsform der Erfindung kann der Gasstrom, gegebenenfalls nach dessen Aufteilung in mehrere Teil-Gasströme, in der Rückhalteeinrichtung mehrfach umgelenkt werden. Dabei kann an mehreren oder jeder Umlenkstelle ein Prallbereich und/oder ein Auffangbereich vorgesehen sein. Durch die mehrfache Umlenkung und das Vorsehen jeweils in Reihe angeordneter Prallbereiche bzw. Auffangbereiche ergibt sich ein verbesserter Reinigungwirkungsgrad.

In einer weiteren Ausführungsform der Erfindung kann der Prallbereich aus einem Material, vorzugsweise einem Kunststoff bestehen, der das Eindringen von festen oder flüssigen Partikeln hoher kinetischer Energie ermöglicht. Hierdurch werden die Partikel dauerhaft aus dem Gasstrom extrahiert.

Nach einer anderen Ausführungsform der Erfindung kann der Auffangbereich eine Ausnehmung umfassen, in welcher sich die Partikel ablagern. Die Ausnehmung ist dabei vorzugsweise so ausgebildet, dass darin befindliche Partikel nicht in Folge von Wirbelbildungen in oder im Bereich der Ausnehmung wieder aus der Ausnehmung heraus und zurück in den Gasstrom befördert werden.

Die Rückhalteeinrichtung kann ein Abschirmelement umfassen, welches in Richtung des Gasstroms in einem bestimmten Abstand vor einer Eintrittsöffnung oder Auslassöffnung für den Gasstrom vorgesehen ist. Das Abschirmelement schirmt die Eintrittsöffnung oder Auslassöffnung mittels eines Prallbereichs gegen das direkte Einströmen von Gas oder das direkte Eintreten von Partikeln ab. Der Gasstrom muss dabei zwischen dem Abschirmelement und der Eintritts- oder Auslassöffnung aus seiner ursprünglichen Richtung umgelenkt werden. An der Umlenkung des Gasstroms besteht wieder die Möglichkeit der Extraktion der Partikel.

In einer weiteren Ausführungsform weist das Abschirmelement Durchgangsöffnungen auf, durch die der gesamte Gasstrom hindurch tritt. Der Öffnungsquerschnitt der Durchgangsöffnungen ist vorzugsweise so gewählt, dass diese in Bezug auf die Partikel eine Filterfunktion ausüben.

Der die Eintrittsöffnung oder Auslassöffnung umgebende Bereich und/oder der Prallbereich des Abschirmelements, auf welche Partikel auftreffen, bestehen vorzugsweise aus einem Material, in welches die Partikel teilweise eindringen und gefangen bleiben und teilweise, gegebenenfalls beim Aufprall zerplatzt, davon abprallen. Dies trägt zu einer Verbesserung der Reinigungswirkung der Rückhalteeinrichtung bei.

Die vorbeschriebene Ausführungsform einer Rückhalteeinrichtung, welche ein Abschirmelement umfasst, eignet sich insbesondere für das Anordnen in einem Hochdruckbereich des Gasstroms, z.B. in einer Brennkammer eines Gasgenerators vor der Brennkammerauslassöffnung.

Nach einer weiteren Ausführungsform der Erfindung kann die Rückhalteeinrichtung mehrere aufeinander folgende, vorzugsweise scheibenartige Elemente umfassen, wobei die Elemente jeweils Durchgangsöffnungen aufweisen und so ausgebildet oder so relativ zueinander angeordnet sind, dass der Gasstrom zumindest zwischen den Elementen jeweils umgelenkt wird. Diese Ausführungsform ermöglicht ein kaskadenartiges Ausbilden der Rückhalteeinrichtung. Hierdurch wird ein einfacher Aufbau und eine kostengünstige Montage ermöglicht.

Beispielsweise können lediglich zwei Typen von Elementen, vorzugsweise koaxial jeweils aufeinander folgend angeordnet sein.

Der erste Typ der Elemente kann eine zentrische Durchgangsöffnung oder einen zentrischen Durchgangsbereich mit mehreren oder einer Vielzahl von Durchgangsöffnungen aufweisen. Der zweite Typ der Elemente kann einen zentrischen Prallbereich und/oder Aufnahmebereich und/oder mehrere Durchgangsöffnungen aufweisen, die in radialer Richtung gegenüber der zentrischen Durchgangsöffnung oder dem zentrischen Durchgangsbereich des ersten Typs der Elemente radial nach außen versetzt sind. Hierdurch ergibt sich jeweils zwischen den beiden Typen der Elemente eine Umlenkung des Gasstroms aus einer axial-zentrischen Richtung in mehrere Gas-Teilströme, die durch die radial nach außen versetzten Durchgangsöffnungen des zweiten Typs der Elemente hindurchströmen.

Der erste Typ der Elemente weist vorzugsweise im Bereich der Verlängerung der Strömungsrichtung des Gases durch die radial nach außen versetzten Durchgangsöffnungen des zweiten Typs der Elemente einen oder mehrere Auffangbereiche und/oder Prallbereiche auf.

Die Durchgangsöffnungen des zweiten Typs der Elemente sind vorzugsweise entlang einer koaxialen Kreislinie angeordnet und die Auffangbereiche und Prallbereiche des ersten Typs der Elemente sind vorzugsweise als umlaufende Nut ausgebildet. Hierdurch ergibt sich eine vereinfachte Herstellung der beiden Typen der Elemente.

Dieser Typ einer kaskadierten Rückhalteeinrichtung eignet sich insbesondere zum Einsatz im Niederdruckbereich eines Gasgenerators, z.B. vor der Gasauslassöffnung eines Hybrid-Gasgenerators.

Weitere Ausführungsformen der Erfindung ergeben sich aus den Unteransprüchen.

Die Erfindung wird nachfolgend anhand in der Zeichnung dargestellter Ausführungsbeispiele näher erläutert. In der Zeichnung zeigen:
- Fig. 1: eine erste Ausführungsform eines Hybrid-Gasgenerators nach der Erfindung im Längsschnitt;
- Fig. 2: vergrößerte Darstellungen des rückwärtigen (Fig. 2a) und des vorderen (Fig. 2b) Bereichs der Ausführungsform gemäß Fig. 1,

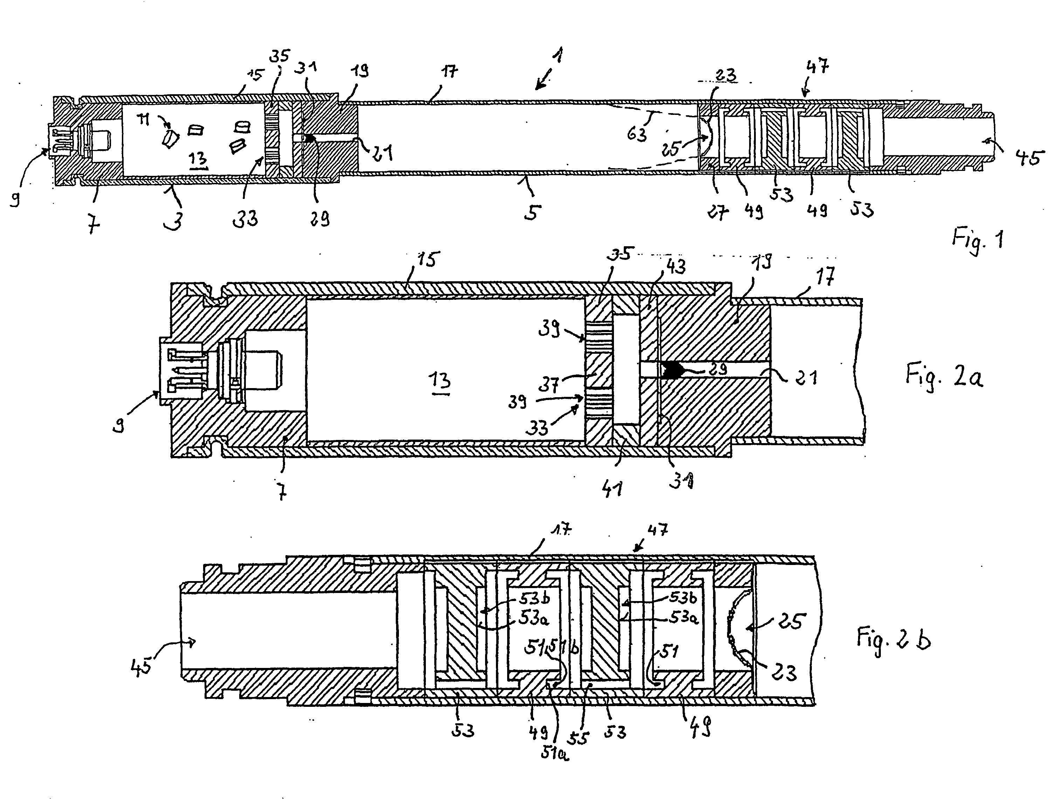

Der in Fig. 1 dargestellte Hybrid-Gasgenerator 1 umfasst eine Brennkammer 3 und einen Gasbehälter 5. Die Brennkammer 3 ist an ihrem rückwärtigen Ende mittels eines scheibenartigen Stopfens 7 verschlossen, wobei im Stopfen 7 eine Aktiviervorrichtung 9 zum Aktivieren eines Gas erzeugenden Materials 11 angeordnet ist, welches im Innenraum 13 der Brennkammer 3 enthalten ist. Die Aktiviervorrichtung 9 ist vorzugsweise als mittels eines elektrischen Signals ansteuerbarer Zünder ausgebildet. Die axial verlaufende Wandung der Brennkammer 3 ist, wie in Fig. 1 dargestellt, vorzugsweise als Rohrabschnitt 15 ausgebildet.

Der Gasbehälter 5, dessen axial verlaufende Außenwandung ebenfalls als Rohrabschnitt 17 ausgebildet sein kann, ist an seinem rückwärtigen, der Brennkammer 3 zugewandten Ende mit einem scheibenartigen Endstück 19 verbunden, in welchem, vorzugsweise in der Achse des Rohrabschnitts 17 verlaufend, ein Führungskanal 21 ausgebildet ist. Das Endstück 19 ist ebenfalls mit dem vorderen Ende des Rohrabschnitts 15 der Brennkammer 3 verbunden. Das Verbinden des Stopfens 7 und des Endstücks 19 mit den Rohrabschnitten 15 bzw. 17 kann beispielsweise durch Verschweißen erfolgen. Diese Elemente können aus Metall oder einem geeigneten Kunststoff bestehen. Anstelle des in Fig. 1 dargestellten mehrteiligen Aufbaus können die genannten Elemente selbstverständlich auch ganz oder teilweise einstückig miteinander ausgebildet sein.

Die Ausbildung der Brennkammer 3 mit einem Kunststoffgehäuse bietet den Vorteil einer einfachen und kostengünstigen Herstellbarkeit. Die Brennkammer kann auch als austauschbare Kartusche ausgebildet sein, die mit dem Gasbehälter 5 lösbar verbunden sein kann. Als Kunststoffmaterial für die vorstehend erwähnten Elemente, die aus Kunststoff bestehen können, eignet sich insbesondere PPEK oder PE. PEEK ist dabei ein äußerst hitzebeständiger Kunststoff, der jedoch relativ teuer ist. PE ist zwar auf Dauer weniger hitzebeständig, weist jedoch bei einer relativ kurzzeitigen Erhitzung einen Selbstschutzeffekt auf: Durch das Erhitzen verdampft ein Teil der Oberfläche des PE, das zudem einen relativ hohen Wasseranteil aufweist. Hierdurch entsteht ein Kühlungseffekt (Schwitzkühlung), der das Material zumindest kurzfristig vor einer Zerstörung schützt.

Im vorderen Endbereich des Gasbehälters 5 ist eine Auslassmembran 23 vorgesehen, welche eine Auslassöffnung 25 des Gasbehälters 5 dicht verschließt. Im dargestellten Ausführungsbeispiel ist die Auslassmembran 23 in einem scheibenartigen Verschlusselement 27 gehalten, welches im vorderen Endbereich des Rohrabschnitts 17 des Gasbehälters 5 angeordnet und mit diesem dicht verbunden ist. Das Verschlusselement 27 kann wiederum aus Metall oder Kunststoff bestehen und mit dem Rohrabschnitt 17 verschweißt oder einstückig mit diesem verbunden sein. Die Auslassmembran 23 ist vorzugsweise an der innenseitigen Stirnwandung des Verschlusselements 27 angeordnet und mit dieser, z.B. durch Schweißen dicht verbunden.

Im Führungskanal 21 des Endstücks 19 des Gasbehälters 5 ist bei der Ausführungsform nach Fig. 1 ein separates Projektil 29 vorgesehen. Das Projektil 29 ist vorzugsweise durch geringe Reibungskräfte im Führungskanal 21 gehalten, so dass es bei Lageänderungen des Gasgenerators 1 nicht aus dem Führungskanal 21 herausfallen kann. An der rückwärtigen Stirnseite des Endstücks 19 ist eine Brennkammer-Auslassmembran 31 vorgesehen. Diese kann aus Metall oder Kunststoff bestehen und ist mit dem aus Metall oder Kunststoff bestehenden Endstück vorzugsweise durch eine ringförmige Schweißnaht, die sich um den Querschnitt des Führungskanals 21 herum erstreckt, dicht verbunden. Im Innenraum 13 der Brennkammer 3 ist vor der durch die Brennkammer-Auslassmembran 31 verschlossenen Öffnung des Führungskanals 21 eine erste Partikelrückhalteeinrichtung 33 vorgesehen. Die Partikelrückhalteeinrichtung 33 umfasst ein scheibenartiges Abschirmelement 35, welches eine Prallbereich 37 aufweist. Der Prallbereich 37 deckt die durch die Membran 31 abgedeckte Öffnung des Führungskanals 21 ab, so dass ein direktes Eindringen von festen oder flüssigen Partikeln, die bei der Gaserzeugung im Innenraum 13 der Brennkammer 3 entstehen, in den Führungskanal 21 bzw. ein Auftreffen der Partikel auf die Membran 31 im Bereich der Öffnung des Führungskanals 21 verhindert wird. Um einen Durchtritt des in der Brennkammer 3 erzeugten Gases durch den Führungskanal 21 in den Gasbehälter 5 zu ermöglichen, weist das Abschirmelement Durchgangsöffnungen 39 auf und ist in einem vorbestimmten Abstand vor der Membran 31 bzw. der Öffnung des Führungskanals 21 angeordnet. Durch die endliche Dicke des Abschirmelements 5 bzw. die endliche Länge der Durchgangsöffnungen 39 kann der durch sie hindurchtretende Partikelstrom nicht direkt im Bereich der Öffnung des Führungskanals 21 auf die Membran 31 auftreffen oder in den Führungskanal 21 eintreten. Die Durchgangsöffnungen können im Querschnitt so klein gewählt sein, dass gleichzeitig eine Filterfunktion erreicht wird.

Um einen definierten Abstand zwischen dem Abschirmelement 35 und dem Endstück 19 zu erreichen, werden bei der in den Fig. 1 und 2 dargestellten Ausführungsform ein Abstandsring 41 und eine Prallplatte 43 verwendet, welche eine mit dem Führungskanal 21 im Endstück 19 fluchtende zentrische Öffnung aufweist.

Die Prallplatte 43 besteht aus einem Material, welches die durch die Durchgangsöffnungen 39 des Abschirmelements 35 hindurch tretenden Partikel beim Auftreffen zerplatzen lässt, so dass diese eine unkritische Größe erreichen, oder das Material ist so beschaffen, dass diejenigen Teilchen, die nicht zerplatzen, in die Prallplatte 43 eindringen und in ihr gefangen bleiben.

Die Partikelrückhalteeinrichtung 33 gewährleistet daher, dass die Membran 31 nicht vor Erreichen eines bestimmten Schwellendrucks durch feste oder flüssige Partikel zerstört wird. Des Weiteren verhindert die Partikelrückhalteeinrichtung 33 das Hindurchtreten von hochenergetischen Partikeln durch den Führungskanal 21.

Im Folgenden wird kurz die Funktion des in den Fig. 1 und 2 dargestellten Hybrid-Gasgenerator erläutert: Nach dem Aktivieren der Aktiviervorrichtung 9 bzw. dem Zünden eines entsprechenden Zünders wird das im Innenraum 13 der Brennkammer 3 enthaltene Gas erzeugende Material 11 aktiviert. Durch die Gaserzeugung erfolgt im Innenraum 13 ein Druckanstieg. Die Brennkammer-Auslassmembran 31 ist hinsichtlich ihrer Dicke und ihres Materials in Abhängigkeit vom Querschnitt des Führungskanals 21 so dimensioniert, dass bei einem vorgegebenen Schwellendruck innerhalb sehr enger Toleranzen ein Zerstören der Membran im Bereich des Querschnitts des Führungskanals 21 erfolgt. Hierbei kann es sich um ein einfaches Aufplatzen der Membran 31 handeln. Das im Führungskanal 21 gehaltene Projektil 29 wird nach dem Zerstören der Membran 31 plötzlich mit dem entsprechenden Schwellendruck beaufschlagt. Das Projektil 29 wird so extrem definiert beschleunigt und über die gesamte Lauflänge im Führungskanal 21 bis zu seinem Austreten aus dem Führungskanal geführt. Die Lauflänge ist dabei als diejenige Länge des Führungskanals 21 definiert, die das Projektil von seiner Ausgangsposition im Führungskanal 21 bis zu seinem Austreten aus dem Führungskanal 21 durchläuft. Die Lauflänge bestimmt neben anderen Faktoren (Beaufschlagungsdruck, Masse des Projektils, etc.) die Endgeschwindigkeit des Projektils 29 beim Verlassen des Führungskanals 21.

Um eine optimale Beschleunigung des Projektils 29 zu gewährleisten, ist dieses vorzugsweise so ausgebildet, dass die Aussenwandung des Projektils 29 im Wesentlichen dicht mit der Innenwandung des Führungskanals 21 abschließt. Hierzu kann das Projektil 29 in seinem rückwärtigen Bereich eine Ausnehmung aufweisen, so dass die verbleibenden Aussenwandungen im Bereich der Ausnehmung mit dem Druck des erzeugten Gases beaufschlagt und gegen die Innenwandung des Führungskanals 21 gedrückt werden. Hierdurch ergibt sich eine abdichtende Wirkung, ohne dass das Projektil in Folge unzulässig hoher Reibungskräfte wesentlich im Führungskanal 21 gebremst wird und ohne dass es einer zusätzlichen Dichteinrichtung oder eines zusätzlichen Dichtmittels, wie beispielsweise eines O-Rings für das Projektil bedürfte.

Das Projektil 29 wird mit einer vorbestimmten Endgeschwindigkeit aus dem Führungskanal 21 ausgestoßen und fliegt in Richtung auf die zerstörbare Auslassmembran 23, welche es beim Auftreffen zerstört. Demzufolge tritt ein Gemisch des im Gasbehälter 5 enthaltenen Vorratsgases und des in der Brennkammer 3 erzeugten Gases, welches nach dem Austreten des Projektils 29 aus dem Führungskanal 21 in den Gasbehälter 5 übertritt, aus der Austrittsöffnung 45 des Gasgenerators 1 aus. Der Verlauf des Massenstroms des aus der Austrittsöffnung 45 austretenden Gasgemischs ist abhängig von den Druckverhältnissen im Innenraum des Gasbehälters 5, die ihrerseits vom Strömungswiderstand zwischen der Auslassöffnung 25 des Gasbehälters 5 und der Austrittsöffnung 45 des Gasgenerators 1 sowie dem durch den Führungskanal 21 in den Innenraum des Gasbehälters 5 eintretenden Massestrom des erzeugten Gases abhängen. Der maximale Druck in der Brennkammer 3 kann z.B. 700 bis 1.500 bar betragen und der maximale Druck im Innenraum des Gasbehälters 5 ca. 300 bis 400 bar. Demzufolge ist es möglich, die Aussenwandung des Gasbehälters 5 deutlich schwächer zu dimensionieren als die Aussenwandung der Brennkammer 3.

Aus Sicherheitsgründen kann die Auslassmembran 23 so dimensioniert sein, dass sie bei Überschreiten eines vorbestimmten kritischen Drucks zerstört wird und die Auslassöffnung 25 freigibt. Eine derartige Situation kann z.B. bei einer Fehlfunktion des Gasgenerators oder einer falschen Montage des Generators ohne das Projektil 29 entstehen. Der kritische Druck, bei dem die Membran 23 zerstört wird, liegt sinnvoller Weise über dem normalen maximalen Arbeitsdruck, der bei einer korrekten Funktionsweise des Gasgenerators im Inneren des Gasbehälters 5 entsteht.

Im vorderen Bereich des Gasgenerators 1 ist eine zweite Partikelrückhalteeinrichtung 47 vorgesehen. Diese umfasst mehrere scheibenförmige Elemente, die jeweils ein Umlenken des austretenden Gasstroms bewirken. Im dargestellten Ausführungsbeispiel ist die zweite Partikelrückhalteeinrichtung aus zwei verschiedenen Typen von scheibenartigen Elementen ausgebildet. Ein erster Typ der scheibenartigen Elemente 49 ist im Wesentlichen durch einen Ring gebildet, dessen zentrische Durchbruchsöffnung 49a ein axiales Hindurchtreten des Gasstroms einschließlich der darin noch befindlichen Partikel gestattet. In den stirnseitigen Wandungen der scheibenartigen Elemente 49 sind Ringnuten 51 ausgebildet. Wie nachstehend erläutert, bilden die Ringnuten 51 Auffangausnehmungen für darin auftreffende feste oder flüssige Partikel. Der zweite Typ 53 der scheibenartigen Elemente weist keinen zentrischen Durchbruch auf, sondern mehrere radial außen liegende Durchbrüche 55. In der Draufsicht eines scheibenartigen Elements 53 können die radial äußeren Durchbrüche als mehrere auf einer Kreislinie angeordnete Bohrungen ausgebildet sein.

Wie in Fig. 1 und 2b dargestellt, tritt der Gasstrom nach dem Zerstören der Auslassmembran 23 zunächst durch ein scheibenartiges Element 49 bzw. dessen zentrische Durchbruchsöffnung 49a hindurch und trifft dann auf den zentrischen Bereich eines danach angeordneten scheibenartigen Elements 53, welches nur radial nach außen versetzte Durchbrüche 55 aufweist. Dieses erste scheibenartige Element 55 dient gleichzeitig für das Auffangen des Projektils 29.

Der Gasstrom wird daher aus seinem zunächst im Wesentlichen axial verlaufenden Strom in im Wesentlichen radiale Richtung umgelenkt und tritt durch die radial nach außen versetzten Durchbrüche 55 des scheibenartigen Elements 53 hindurch. Der zentrische Bereich der scheibenartigen Elemente 53 kann dabei wiederum als Prallbereich 53a ausgebildet sein, wie dies in Verbindung mit der Prallplatte 43 bereits beschrieben wurde. Des Weiteren kann der Prallbereich 53a am Boden einer Ausnehmung vorgesehen sein, so dass die Ausnehmung als Auffangbereich 53b wirkt, in dem sich Partikel ablagern können. Nach dem Hindurchtreten durch die Durchbrüche 55 des scheibenartigen Elements 53 muss der Gasstrom erneut (zweifach) umgelenkt werden, um wiederum in im Wesentlichen axialer Richtung durch die zentrische Durchbruchsöffnung 49a des zweiten scheibenartigen Elements 49 hindurch treten zu können. Der Querschnitt der Durchbrüche 55 kann so gewählt werden, dass gleichzeitig eine Filterfunktion erreicht wird. Bei dem Umlenken des Gasstroms aus der parallel-axialen Richtung bei seinem Hindurchtreten durch die Durchbrüche 55 des scheibenartigen Elements 53 in eine im Wesentlichen radial einwärts gerichtete Richtung werden Partikel in der Ringnut 51 des zweiten scheibenartigen Elements 49 aufgefangen, da die Partikel, zumindest wenn sie eine gewisse Masse überschreiten, der raschen Umlenkung des Gasstroms nicht folgen können. Der Innenraum der Ringnut 51 dient daher als Auffangbereich 51a. Zumindest die stirnseitige Innenwandung der Ringnut 51 bzw. das gesamte Element 49 kann wiederum aus einem Material bestehen, das ein Eindringen hochenergetischer Partikel erlaubt und diese gefangen hält oder die auftreffenden Partikel zerplatzen lässt. Die Ringnut 51 bildet somit gleichzeitig einen Prallbereich 51a und einen Auffangbereich 51b. Anstelle einer Ringnut 51, die für alle Durchbrüche 55 als gemeinsamer Prallbereich bzw. Auffangbereich wirkt, können selbstverständlich jedem Durchbruch oder jeweils mehreren Durchbrüchen separate Prallbereiche oder Auffangbereiche zugeordnet sein.

Bei der in Fig. 1 und 2 dargestellten Ausführungsform erfolgt ein erneutes Umlenken des das zweite scheibenartige Element 49 zentrisch durchströmenden Gasstroms derart, dass dieser durch die radial außen liegenden Durchbrüche 55 des zweiten scheibenartigen Elements 53 hindurch treten kann. Der zentrische Bereich des Elements 53 dient wiederum als Prallbereich 53a und Auffangbereich 53b. Nach dem Hindurchtreten durch die Durchbrüche 55 des zweiten scheibenartigen Elements 53 verlässt der Gasstrom durch die zentrische Auslassöffnung 45 im vorderen Bereich des Gasgenerators 1. Dieser kann so ausgebildet sein, dass darin ein aufzublasender Gassack, z.B. ein Airbag, befestigt werden kann.

Anstelle großer zentrischer Durchbrüche in den scheibenartigen Elementen 49 können in diesem Bereich auch eine Vielzahl von kleinen Durchbrüchen vorgesehen sein, die als Filter wirken oder im zentrischen Durchbruch kann ein siebartiges Element eingesetzt sein.

Bei der in den Fig. 1 und 2 dargestellten Ausführungsform einer Partikelrückhalteeinrichtung 47 ergibt sich der Vorteil, dass diese aus nur zwei unterschiedlichen Bauteilen (die scheibenartigen Elemente 49 und 53) aufgebaut ist. Dies führt neben dem Vorteil einer kostengünstigen Realisierung zu einer einfachen und fehlerunanfälligen Montage.

Selbstverständlich kann die Partikelrückhalteeinrichtung 47 jedoch, ebenso wie die Partikelrückhalteeinrichtung 33, auch auf beliebige andere Weisen realisiert werden, wobei in jedem Fall wenigstens eine Umlenkung des die Partikel enthaltenden Gasstroms und wenigstens ein Prallbereich und/oder Aufnahmebereich erforderlich ist, der im Wesentlichen in der verlängerten Richtung der Gasströmung vor der Umlenkung vorgesehen ist.

Ergänzend sei an dieser Stelle erwähnt, dass die Lauflänge für ein im Führungskanal 21 geführtes Projektil 29 zumindest das Einfache des Projektildurchmesser betragen soll, um eine ausreichende Führung zu erreichen.

Der Führungskanal oder Lauf bewirkt bei dem erfindungsgemäßen Gasgenerator bei entsprechender Dimensionierung zusätzlich, dass ein enger, scharf begrenzter Gasstrahl entsteht, der aus der Brennkammer in den Gasbehälter eintritt. Durch geeignete Dimensionierung des Führungskanals kann die Länge des keulenartigen Strahls und dessen Durchmesser sowie der Öffnungswinkel des Strahls so bestimmt werden, dass sich eine gute Durchmischung des aus der Brennkammer austretenden Gases mit dem im Gasbehälter enthaltenen Vorratsgas ergibt. Das Verhältnis des Durchmessers bzw. Querschnitts des Führungskanal zum Durchmesser bzw. Querschnitt des Gasbehälters liegt dabei vorzugsweise im Bereich von 1/10 bis 1/5.

## Patentansprüche

1. Gasgenerator, insbesondere zum Befüllen eines Gassacks,
a) mit einem Gehäuse (7, 15, 17, 27), in welchem mittels eines aktivierbaren gaserzeugenden Materials (11), welches in einer Brennkammer (3) vorgesehen ist, ein Gasstrom erzeugbar ist, welcher aus einer Auslassöffnung (45) des Gehäuses austritt, und
b) mit einer Rückhalteeinrichtung (33; 47) für das Rückhalten von Partikeln, die bei der Gaserzeugung entstehen, welche vom erzeugten Gasstrom durchströmt ist,
c) wobei der Gasstrom oder ein Teil-Gasstrom in der Rückhalteeinrichtung (33; 47) wenigstens einmal derart um einen ausreichend engen Kurvenradius und einen ausreichend großen Winkel aus seiner Strömungsrichtung ausgelenkt wird, dass die Partikel den Gasstrom oder Teil-Gasstrom verlassen, und
d) wobei im Wesentlichen in Verlängerung der Strömungsrichtung ein Prallbereich (37, 43; 51a, 53a) oder ein Auffangbereich (51b, 53b) mit einem Prallbereich vorgesehen ist,
**dadurch gekennzeichnet,**
e) dass der Prallbereich (37, 43; 51a, 53a) aus einem Material besteht, welches das Eindringen und zumindest teilweise Zurückhalten von im Gasstrom mitgeführten festen oder flüssigen Partikeln hoher kinetischer Energie ermöglicht.

2. Gasgenerator nach Anspruch 1, **dadurch gekennzeichnet, dass** der Prallbereich (37, 43; 51a, 53a) aus einem Kunststoff besteht, in welchen die festen oder flüssigen Partikel eindringen, wobei das Material vorzugsweise aufschmilzt und die eingedrungenen Partikel festhält.

3. Gasgenerator nach Anspruch 2, **dadurch gekennzeichnet, dass** eine Umlenkung des Gasstroms oder Teil-Gasstrom um einen Winkel von größer oder gleich 45°, vorzugsweise größer oder gleich 80°erfolgt.

4. Gasgenerator nach Anspruch einem der vorhergehenden Ansprüche, **dadurch gekennzeichnet, dass** der Gasstrom in der Rückhalteeinrichtung (33; 47) mehrfach umgelenkt wird und an mehreren oder jeder Umlenkstelle ein Prallbereich (37, 43; 51a, 53a) oder ein Auffangbereich mit einem Prallbereich vorgesehen ist.

5. Gasgenerator nach einem der vorhergehenden Anspruche, **dadurch gekennzeichnet, dass** der Auffangbereich (51b, 53b) eine Ausnehmung umfasst, in welcher sich die Partikel ablagern.

6. Gasgenerator nach einem der vorhergehenden Ansprüche, **dadurch gekennzeichnet, dass** die Rückhalteeinrichtung (33) ein Abschirmelement (34) umfasst, welches in Richtung des Gasstroms in einem bestimmten Abstand vor einer Eintrittsöffnung oder Auslassöffnung für den Gasstrom vorgesehen ist und welches die Eintrittsöffnung oder Auslassöffnung mittels eines Prallbereichs (37) gegen das direkte Einströmen von Gas oder das direkte Eintreten von Partikeln abschirmt, wobei der Gasstrom für das Eintreten in den Zwischenraum zwischen dem Abschirmelement (35) und der Eintrittsöffnung oder Auslassöffnung aus seiner ursprünglichen Richtung umgelenkt wird.

7. Gasgenerator nach Anspruch 6, **dadurch gekennzeichnet, dass** das Abschirmelement (35) Durchgangsöffnungen (39) aufweist, durch die der gesamte Gasstrom hindurchtritt, wobei der Öffnungsquerschnitt der Durchgangsöffnungen vorzugsweise so gewählt ist, dass diese in Bezug auf die Partikel eine Filterfunktion ausüben.

8. Gasgenerator nach Anspruch 6, **dadurch gekennzeichnet, dass** zumindest der die Eintrittsöffnung oder Auslassöffnung umgebende Bereich (43) und/oder der Prallbereich (37) des Abschirmelements (35), die einem Auftreffen von Partikeln ausgesetzt sind, aus einem Material bestehen, in welches die Partikel teilweise eindringen und gefangen bleiben und teilweise, ggf. beim Aufprall zerplatzt, davon abprallen.

9. Gasgenerator nach einem der vorhergehenden Ansprüche, **dadurch gekennzeichnet, dass** die Rückhalteeinrichtung (33) vor einer Brennkammerauslassöffnung der Brennkammer (3) angeordnet ist.

10. Gasgenerator nach einem der Ansprüche 1 bis 5, **dadurch gekennzeichnet, dass** die Rückhalteeinrichtung (47) mehrere aufeinanderfolgende, vorzugsweise scheibenartige Elemente (49, 53) umfasst, wobei die Elemente (49, 53) jeweils Durchgangsöffnungen (49a, 55) aufweisen und so ausgebildet oder so relativ zueinander angeordnet sind, dass der Gasstrom zumindest zwischen den Elementen (49, 53) jeweils umgelenkt wird.

11. Gasgenerator nach Anspruch 9, **dadurch gekennzeichnet, dass** die Elemente (49, 53) koaxial aufeinanderfolgend angeordnet sind.

12. Gasgenerator nach Anspruch 11, **dadurch gekennzeichnet, dass** zwei Typen von Elementen (49, 53) abwechselnd aufeinanderfolgend angeordnet sind.

13. Gasgenerator nach Anspruch 13, **dadurch gekennzeichnet, dass** der erste Typ der Elemente (49) eine zentrische Durchgangsöffnung (49a) oder einen zentrischen Durchgangsbereich mit mehreren oder einer Vielzahl von Durchgangsöffnungen aufweist und dass der zweite Typ der Elemente (53) einen zentrischen Prallbereich (53a) und/oder Aufnahmebereich (53b) und eine oder mehrere Durchgangsöffnungen (55) aufweist, die in radialer Richtung gegenüber der zentrischen Durchgangsöffnung (49a) oder dem zentrischen Durchgangsbereich des ersten Typs der Elemente (49) radial nach außen versetzt sind.

14. Gasgenerator nach Anspruch 13, **dadurch gekennzeichnet, dass** der erste Typ der Elemente (49) im Bereich der Verlängerung der Strömungsrichtung des Gases durch die radial nach außen versetzten Durchgangsöffnungen (55) des zweiten Typs der Elemente (53) einen oder mehrere Auffangbereiche (51b) und/oder Prallbereiche (51a) aufweist.

15. Gasgenerator nach Anspruch 14, **dadurch gekennzeichnet, dass** die Durchgangsöffnungen (55) des zweiten Typs der Elemente (53) entlang einer koaxialen Kreislinie angeordnet sind und dass die Auffangbereiche (51b) des ersten Typs der Elemente (49) vorzugsweise als umlaufende Nut (51) ausgebildet sind.

16. Gasgenerator nach einem der Ansprüche 10 bis 15, **dadurch gekennzeichnet, dass** die Rückhalteeinrichtung (47) in einem Niederdruckbereich der Gasströmung angeordnet ist, vorzugsweise vor der Gasauslassöffnung (45) eines Hybrid-Gasgenerators (1).

## Claims

1. Gas generator in particular for filling a gas sack,
a) with a housing (7, 15, 17, 27) in which a gas flow can be generated by means of an activatable gas-generating material (11) provided in a combustion chamber (3), which flow emerges from an outlet opening (45) of the housing, and
b) with a retention device (33; 47) to retain particles occurring on gas generation, through which device flows the gas flow generated;
c) where the gas flow or a part gas flow is deflected in the retention device (33; 47) from its flow direction at least once about a sufficiently tight curve radius and a sufficiently large angle that the particles leave the gas flow or part gas flow, and
d) where essentially in extension of the flow direction is provided a rebound area (37, 43; 51a, 53a) or a catchment area (51b, 53b) with a rebound area,
**characterised in that**
e) the rebound area (37, 43; 51a, 53a) comprises a material which allows the penetration and at least partial retention of solid or liquid particles of high kinetic energy carried in the gas flow.

2. Gas generator according to claim 1, **characterised in that** the rebound area (37, 43; 51a, 53a) comprises a plastic into which penetrate the solid or liquid particles, the material preferably melting and retaining the penetrated particles.

3. Gas generator according to claim 2, **characterised in that** the gas flow or part gas flow is deflected about an angle greater than or equal to 45°, preferably greater than or equal to 80°.

4. Gas generator according to any of the previous claims, **characterised in that** the gas flow is deflected several times in the retention device (33; 47) and at several or each deflection point a rebound area (37, 43; 51a, 53a) or a catchment area with a rebound area is provided.

5. Gas generator according to any of the previous claims, **characterised in that** the catchment area (51b, 53b) has a recess in which the particles are deposited.

6. Gas generator according to any of the previous claims, **characterised in that** the retention device (33) comprises a screening element (34) which is provided in the direction of the gas flow at a particular distance in front of an inlet opening or outlet opening for the gas flow and which by means of a rebound area (37) screens the inlet opening or outlet opening against the direct inflow of gas or the direct penetration of particles, the gas flow being deflected from its original direction to enter the intermediate area between the screening element (35) and the inlet opening or outlet opening.

7. Gas generator according to claim 6, **characterised in that** the screening element (35) has passage openings (39) through which passes the entire gas flow, the opening cross section of the passage openings preferably being selected such that in relation to the particles said openings exert a filter function.

8. Gas generator according to claim 6, **characterised in that** at least the area (43) surrounding the inlet opening or outlet opening, and/or the deflector area (37) of the screening element (35), which are exposed to impact of particles, comprise a material in which the particles partly penetrate and remain captured and partly rebound therefrom, where applicable exploding on rebound.

9. Gas generator according to any of the previous claims, **characterised in that** the retention device (33) is arranged in front of a combustion chamber outlet opening of the combustion chamber (3).

10. Gas generator according to any of claims 1 to 5, **characterised in that** the retention device (47) comprises several successive preferably disc-like elements (49, 53), the elements (49, 53) each having passage openings (49a, 55) and being designed or arranged relative to each other such that the gas flow is deflected at least between the elements (49, 53).

11. Gas generator according to claim 9, **characterised in that** the elements (49, 53) are arranged coaxially in succession.

12. Gas generator according to claim 11, **characterised in that** two types of element (49, 53) are arranged alternately in succession.

13. Gas generator according to claim 13, **characterised in that** the first element type (49) has a central passage opening (49a) or a central passage area with several or a multiplicity of passage openings, and that the second element type (53) has a central rebound area (53a) and/or receiver area (53b) and one or more passage openings (55) which are offset radially outwards in the radial direction in relation to the central passage opening (49a) or the central passage area of the first element type (49).

14. Gas generator according to claim 13, **characterised in that** the first element type (49), in the area of the extension of the gas flow direction through the radially outwardly offset passage openings (55) of the second element type (53), has one or more catchment areas (51b) and/or rebound areas (51a).

15. Gas generator according to claim 14, **characterised in that** the passage openings (55) of the second element type (53) are arranged along a coaxial circle and that the catchment areas (51b) of the first element type (49) are preferably formed as a peripheral groove (51).

16. Gas generator according to any of claims 10 to 15, **characterised in that** the retention device (47) is arranged in a low pressure area of the gas flow, preferably in front of the gas outlet opening (45) of a hybrid gas generator (1).

## Revendications

1. Générateur de gaz destiné notamment à remplir un sac à gaz,
a) avec un boîtier (7, 15, 17, 27) dans lequel il est possible de produire, au moyen d'une matière gazogène activable (11) prévue dans une chambre de combustion (3), un courant de gaz qui sort par un orifice de sortie (45) du boîtier, et
b) avec un dispositif de retenue (33, 47) destiné à retenir des particules générées lors de la production de gaz et parcourue par le courant de gaz produit,
c) le courant de gaz ou un courant de gaz partiel dans le dispositif de retenue (33, 47) étant dévié au moins une fois de sa direction d'écoulement et ce, d'un angle de virage suffisamment étroit et d'un angle suffisamment grand de telle façon que les particules quittent le flux gazeux ou le flux gazeux partiel et
d) une zone d'impact (37, 43, 51a, 53a) ou une zone de collecte (51b, 53b) avec une zone d'impact étant prévue essentiellement dans le prolongement de la direction d'écoulement,
**caractérisé en ce que**
e) la zone d'impact (37, 43, 51a, 53a) est constituée d'un matériau qui permet la pénétration et au moins la retenue partielle des particules solides ou liquides à énergie cinétique élevée entraînées dans le courant de gaz.

2. Générateur de gaz selon la revendication 1, **caractérisé en ce que** la zone d'impact (37, 43, 51a, 53a) est en matière plastique, dans laquelle pénètrent les particules solides ou liquides, la matière fondant, de préférence, et retenant les particules introduites.

3. Générateur de gaz selon la revendication 2, **caractérisé en ce qu'**une déviation du flux gazeux ou du flux gazeux partiel s'effectue suivant un angle égal ou supérieur à 45°, de préférence égal ou supérieur à 80°.

4. Générateur de gaz selon l'une quelconque des revendications précédentes, **caractérisé en ce que** le courant de gaz est dévié plusieurs fois dans le dispositif de retenue (33, 47) et qu'il est prévu, au niveau de chaque ou de plusieurs points de déviation, une zone d'impact (37, 43, 51a, 53a) ou une zone de collecte avec une zone d'impact.

5. Générateur de gaz selon l'une quelconque des revendications précédentes, **caractérisé en ce que** la zone de collecte (51b, 53b) présente un enfoncement dans lequel se déposent les particules.

6. Générateur de gaz selon l'une quelconque des revendications précédentes, **caractérisé en ce que** le dispositif de retenue (33) possède un élément de protection (34) qui, dans le sens du courant gazeux, est prévu, écarté de façon définie, devant un orifice d'entrée ou un orifice de sortie pour le flux de gaz et qui protège, au moyen d'une zone d'impact (37), l'orifice d'entrée ou l'orifice de sortie de l'écoulement gazeux direct ou de la pénétration directe de particules, le courant de gaz; pour entrer dans l'espace intermédiaire entre l'élément de protection (35) et l'orifice d'entrée ou l'orifice de sortie, étant dévié de sa direction initiale.

7. Générateur de gaz selon la revendication 6, **caractérisé en ce que** l'élément de protection (35) présente des orifices de passage (39) à travers lesquels tout le flux gazeux passe, la section d'ouverture des orifices de passage étant choisie de préférence de telle sorte qu'ils remplissent une fonction de filtre en ce qui concerne les particules.

8. Générateur de gaz selon la revendication 6, **caractérisé en ce qu'**au moins la zone (43) entourant l'orifice d'entrée ou l'orifice de sortie et/ou la zone d'impact (37) de l'élément de protection (35), exposée(s) à une apparition de particules, est/sont composée(s) d'un matériau dans lequel les particules pénètrent en partie et restent piégées et, en partie, rebondissent, le cas échéant, éclatées lors de l'impact.

9. Générateur de gaz selon l'une quelconque des revendications précédentes, **caractérisé en ce que** le dispositif de retenue (33) est disposé devant un orifice de sortie de la chambre de combustion (3).

10. Générateur de gaz selon l'une quelconque des revendications 1 à 5,
**caractérisé en ce que** le dispositif de retenue (47) comporte plusieurs éléments (49, 53) successifs, de préférence de type disque, les éléments (49, 53) présentant respectivement des orifices de passage (49a, 55), et étant conçus ou disposés les uns par rapport aux autres de telle sorte que le flux gazeux soit dévié, à chaque fois, au moins, entre les éléments (49, 53).

11. Générateur de gaz selon la revendication 9, **caractérisé en ce que** les éléments (49, 53) sont disposés successivement de façon coaxiale.

12. Générateur de gaz selon la revendication 11, **caractérisé en ce que** deux types d'éléments (49, 53) sont disposés successivement de façon alternative.

13. Générateur de gaz selon la revendication 12, **caractérisé en ce que** le premier type d'éléments (49) présente un orifice de passage (49a) central ou une zone de passage centrale avec plusieurs ou une pluralité d'orifices de passage et **en ce que** le deuxième type d'éléments (53) présente une zone d'impact centrale (53a) et/ou une zone de collecte (53b) ainsi qu'un ou plusieurs orifïce(s) de passage (55), décalé(s), dans le sens radial, par rapport à l'orifice de passage central (49a) ou à la zone de passage centrale du premier type d'éléments (49), radialement vers l'extérieur.

14. Générateur de gaz selon la revendication 13, **caractérisé en ce que** le premier type d'éléments (49) présente une ou plusieurs zone(s) de collecte (51b) et/ou zone(s) d'impact (51a), dans la zone de prolongement de la direction d'écoulement du gaz à travers les orifices de passage (55) décalés radialement vers l'extérieur du deuxième type d'éléments (53).

15. Générateur de gaz selon la revendication 14, **caractérisé en ce que** les orifices de passage (55) du deuxième type d'éléments (53) sont disposés le long d'un cercle coaxial et **en ce que** les zones de collecte (51b) du premier type d'éléments (49) sont réalisées de préférence sous forme de rainure tournante (51).

16. Générateur de gaz selon l'une quelconque des revendications 10 à 15, **caractérisé en ce que** le dispositif de retenue (47) est disposé dans une zone de basse pression du flux gazeux, de préférence devant l'orifice de sortie du gaz (45) d'un générateur de gaz hybride (1).
